# EUROPEAN PATENT APPLICATION

(11) **EP 4 319 294 A1**
(43) Date of publication of application: **07.02.2024**
(21) Application number: 22781571.9
(22) Date of filing: 29.03.2022
(51) Int. Cl.: H04W 36/00, H04W 36/08, H04W 84/06, H04B 7/185

(54) **COMMUNICATIONS INVOLVING NTNS**

(30) Priority: 29.03.2021 KR 20210040240
(71) Applicant: LG Electronics Inc., Yeongdeungpo-gu Seoul 07336 (KR)
(72) Inventor: HWANG, Jinyup, Seoul 06772 (KR); YANG, Yoonoh, Seoul 06772 (KR); LEE, Sangwook, Seoul 06772 (KR); LIM, Suhwan, Seoul 06772 (KR); PARK, Jinwoong, Seoul 06772 (KR)
(74) Representative: Plasseraud IP
(86) International application number: PCT/KR2022/004414
(87) International publication number: WO 2022/211452

(57) **Abstract**

A disclosure of the present specification provides a method for performing communications involving NTNs by a serving base station. The method may comprise the steps of: transmitting a synchronization signal to a terminal; transmitting NTN-related system information to the terminal; receiving a RACH from the terminal; transmitting a RA response message to the terminal; and transmitting a handover command message to the terminal.

## Description

### TECHNICAL FIELD

The present disclosure relates to mobile communication.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

Non-Terrestrial Network (NTN) based communication is being discussed in NR. Terminals can perform NTN-based communication with satellites, airplanes, etc. On the other hand, the prior art does not discuss how the terminal can effectively perform NTN-based communication. For example, when an NTN satellite moves, the feeder link switching behavior in which the terrestrial base station (e.g., NTN gateway) changes is not clearly discussed.

For example, a terrestrial base station may be connected to a data network, the terrestrial base station may form a feeder link with an NTN satellite, and the NTN satellite may establish a service link with an NTN terminal. The NTN terminal may receive signals transmitted by the terrestrial base station via the NTN satellite, and the NTN terminal can transmit signals to the terrestrial base station via the NTN satellite.

In such cases, feeder link switching operation may occur in NTN communication, where the a terrestrial base station (NTN gateway) changes according to the movement of the NTN satellite. In this case, the feeder link between the NTN satellite and the terrestrial base station may be switched while the service link between the NTN terminal and the NTN satellite is maintained. For example, the NTN terminal may receive signals from the same NTN satellite, but there may be a temporary service interruption due to the feeder link switching. As a result, the temporary service interruption may affect the terminal's ability to transmit and receive signals and the timing of its initial connection and synchronization with signals transmitted from a target TN gNB (e.g., a target terrestrial base station). The operations associated with such feeder link switching has not been clearly discussed in the prior art.

### DISCLOSURE

### TECHNICAL PROBLEM

Accordingly, a disclosure of the present specification has been made in an effort to solve the aforementioned problem.

**TECHNICAL SOLUTION**In order to solve the above problems, one disclosure of the present disclosure provides a method for performing communications related to an NTN, the method performed by a serving base station. The method may comprise: transmitting a synchronization signal to a terminal; transmitting system information related to the NTN to the terminal; receiving an RACH from the terminal; transmitting an RA response message to the terminal; and transmitting a handover command message to the terminal.

In order to solve the above problems, one disclosure of the present specification provides a base station for performing a communication related to NTN. The base station includes at least one processor; and at least one memory that stores instructions and is operably electrically connectable with the at least one processor, wherein the instructions are executed based on execution by the at least one processor. Operations performed based on the command being executed by the at least one processor may include: transmitting a synchronization signal to a terminal; transmitting system information related to the NTN to the terminal; receiving an RACH from the terminal; transmitting an RA response message to the terminal; and transmitting a handover command message to the terminal.

In order to solve the above problem, one disclosure of the present specification provides a method for a UE to perform NTN-related communication. The method may include: receiving a synchronization signal from a base station; receiving system information related to the NTN from the base station, based on the terminal being connected to the base station via an NTN satellite; transmitting a RACH to the base station; receiving an RA response message from the base station; and receiving a handover command message from the serving base station; and performing a measurement for the target base station.

In order to solve the above problems, one disclosure of the present specification provides a terminal for performing a communication related to NTN. The terminal includes at least one processor; and at least one memory that stores instructions and is operably electrically connectable with the at least one processor, wherein the instructions are executed based on execution by the at least one processor. Operations performed based on the command being executed by the at least one processor may include: receiving a synchronization signal from a base station; receiving system information related to the NTN from the base station, based on the terminal being connected to the base station via an NTN satellite; transmitting a RACH to the base station; receiving an RA response message from the base station; and receiving a handover command message from the serving base station; and performing a measurement for the target base station.

In order to solve the above problems, one disclosure of the present specification provides an apparatus in mobile communication system. The apparatus includes at least one processor; and at least one memory that stores instructions and is operably electrically connectable with the at least one processor, wherein the instructions are executed based on execution by the at least one processor. Operations performed based on the command being executed by the at least one processor may include: identifying a synchronization signal from a base station; identifying system information related to the NTN from the base station, based on the terminal being connected to the base station via an NTN satellite; generating a RACH to the base station; identifying an RA response message from the base station; and identifying a handover command message from the serving base station; and performing a measurement for the target base station.

In order to solve the above problems, one disclosure of the present specification provides a non-volatile (non-volatile) computer readable storage medium recording instructions. The instructions, when executed by one or more processors, cause the one or more processors to: identifying a synchronization signal from a base station; identifying system information related to the NTN from the base station, based on the terminal being connected to the base station via an NTN satellite; generating a RACH to the base station; identifying an RA response message from the base station; and identifying a handover command message from the serving base station; and performing a measurement for the target base station.

### ADVANTAGEOUS EFFECTS

According to the disclosure of the present specification, it is possible to solve the problems of the related art.

Effects that can be obtained through specific examples of the present specification are not limited to the effects listed above. For example, various technical effects that a person having ordinary skill in the related art can understand or derive from the present specification may exist. Accordingly, the specific effects of the present specification are not limited to those explicitly described herein, and may include various effects that can be understood or derived from the technical characteristics of the present specification.

### BRIEF DESCRIPTION OF THE DRAWINGS

FIG. 1 shows an example of a communication system to which implementation of the present disclosure is applied.
FIG. 2 shows an example of a wireless device to which implementation of the present disclosure is applied.
FIG. 3 shows an example of a wireless device to which implementation of the present disclosure is applied.
FIG. 4 shows an example of a radio frame structure of NR to which implementation of the present disclosure is applied.
FIG. 5 shows an example of a slot structure of an NR frame to which implementation of the present disclosure is applied.
FIG. 6 is an exemplary diagram illustrating an example of an SS block in NR.
FIG. 7 an exemplary diagram illustrating an example of beam sweeping in NR.
FIG. 8 illustrate a procedure of measurement and measurement report considering an SS burst.
FIG. 9 shows a first example of an NTN scenario.
FIG. 10 shows a second example of an NTN scenario.
FIGS. 11a and 11b illustrate an example of service coverage of a satellite according to one embodiment of the present disclosure.
FIG. 12 illustrates an example of service link switching according to one embodiment of the present disclosure.
FIG. 13 illustrates an example of feeder link switching according to one embodiment of the present disclosure.
FIG. 14 illustrates an example of an operation of a terminal according to one embodiment of the present disclosure.
FIG. 15 illustrates an example of an operation of an NTN base station according to one embodiment of the present disclosure.
FIG. 16 illustrates an example of an operation of a terminal according to one embodiment of the present disclosure.
FIG. 17 illustrates an example of an initial access procedure of an NTN communication according to one embodiment of the present disclosure.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDDCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

Although a user equipment (UE) is illustrated by way of example in the accompanying drawings, the illustrated UE may be referred to as a terminal, mobile equipment (ME), and the like. In addition, the UE may be a portable device such as a notebook computer, a mobile phone, a PDA, a smartphone, and a multimedia device or may be a non-portable device such as a PC or a vehicle-mounted device.

Hereinafter, a UE is used as an example of a wireless communication device (or a wireless device or wireless equipment) capable of wireless communication. An operation performed by a UE may be performed by a wireless communication device. A wireless communication device may also be referred to as a wireless device, wireless equipment, or the like. Hereinafter, AMF may mean an AMF node, SMF may mean an SMF node, and UPF may mean a UPF node.

A base station used below generally refers to a fixed station communicating with a wireless device and may also be referred as an evolved-NodeB (eNodeB), an evolved-NodeB (eNB), a base transceiver system (BTS), an access point, and a next generation NodeB (gNB).

### I. Techniques and procedures applicable to present disclosure

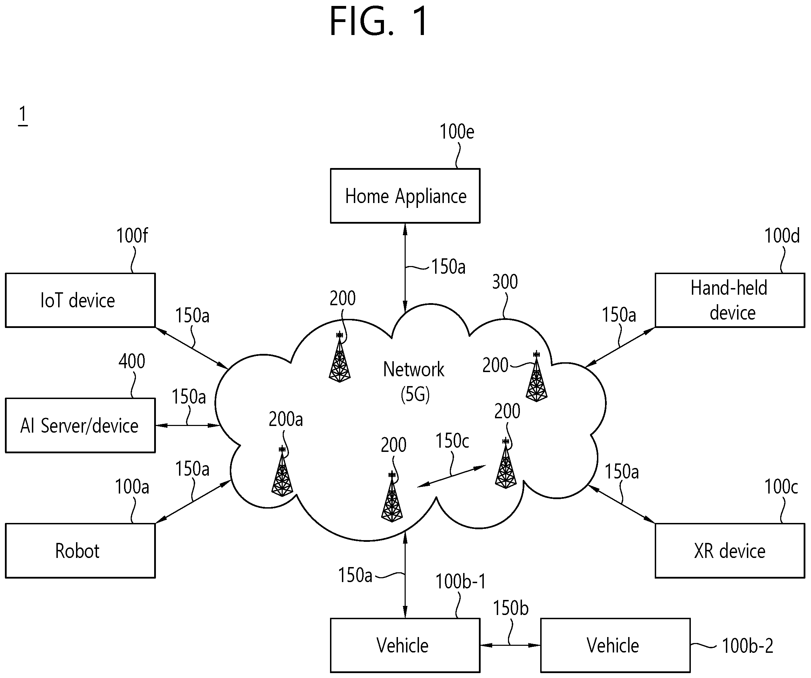

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Partial use cases may require a plurality of categories for optimization and other use cases may focus only upon one key performance indicator (KPI). 5G supports such various use cases using a flexible and reliable method.

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/SG devices. The wireless devices 100a to 100f may include, without being limited to, a robot 100a, vehicles 100b-1 and 100b-2, an extended reality (XR) device 100c, a hand-held device 100d, a home appliance 100e, an Internet of Things (IoT)device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closedcircuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerical value of the frequency range of the NR system may be changed. For example, FR1 may include a frequency band of 410 MHz to 7125 MHz as shown in Table 2 below. That is, FR1 may include a frequency band of 6 GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410 MHz - 7125 MHz | 15, 30, 60 kHz |
| FR2 | 24250 MHz - 52600 MHz | 60, 120, 240 kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

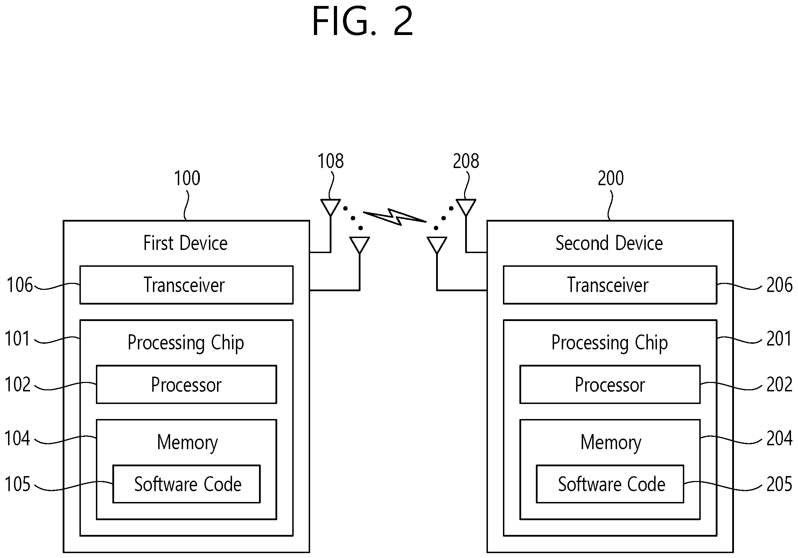

FIG. 2 shows an example of wireless devices to which implementations of the present disclosure is applied.

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

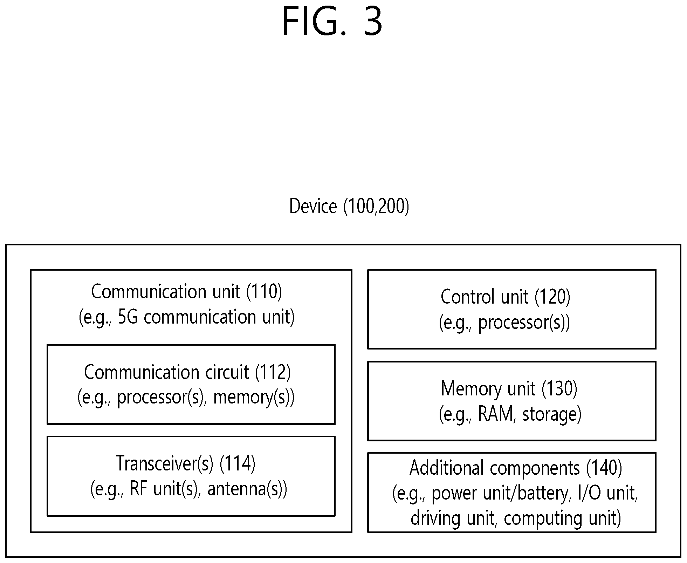

**FIG. 3** **shows an example of a wireless device to which implementations of the present disclosure is applied.**

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

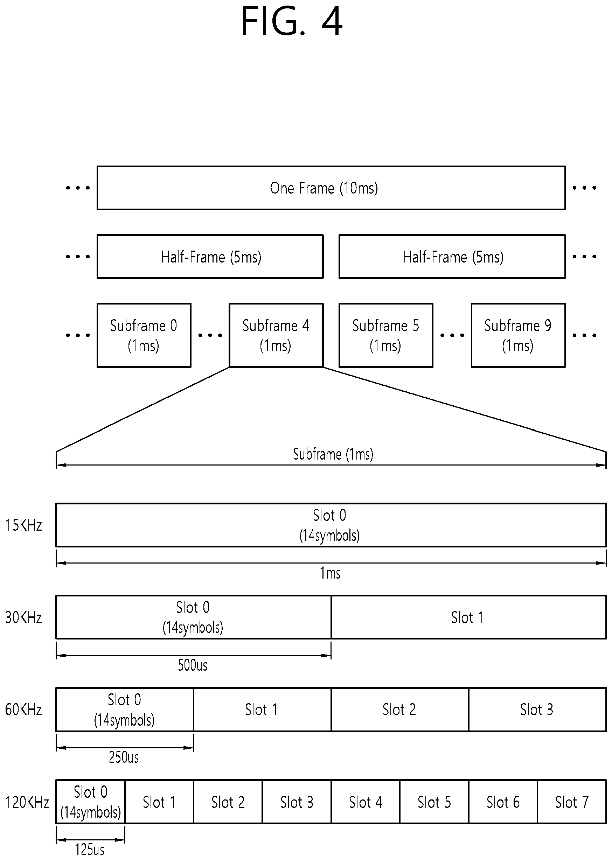

**FIG. 4** **shows an example of a radio frame structure of NR to which implementation of the present disclosure is applied.**

FIG. 4 shows a radio frame structure of NR according to an embodiment of the present disclosure. The embodiment of FIG. 4 may be combined with various embodiments of the present disclosure.

Referring to FIG. 4, a radio frame may be used in uplink and downlink transmission in NR. The radio frame has a length of 10 ms and may be defined as two 5 ms half-frames (HF). A half-frame may include 5 1 ms subframes (SF). A subframe may be divided into one or more slots, and the number of slots in a subframe may be determined according to a subcarrier spacing (SCS). Each slot may include 12 or 14 OFDM(A) symbols according to a cyclic prefix (CP).

When a normal CP is used, each slot may include 14 symbols. When an extended CP is used, each slot may include 12 symbols. Here, the symbol may include an OFDM symbol (or a CP-OFDM symbol), a single carrier-FDMA (SC-FDMA) symbol (or a discrete Fourier transform-spread-OFDM (DFT-s-OFDM) symbol).

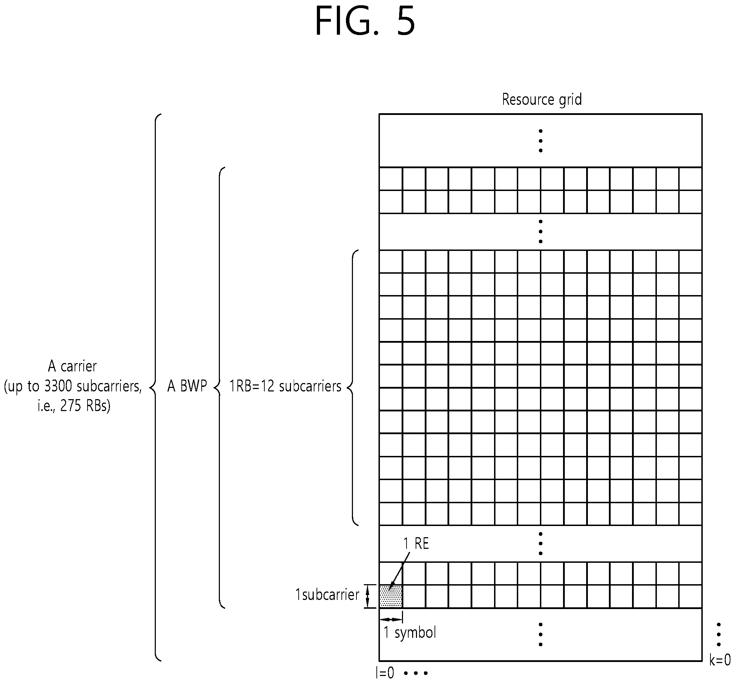

**FIG. 5** **shows an example of a slot structure of an NR frame to which implementation of the present disclosure is applied.**

FIG. 5 shows a slot structure of an NR frame according to an embodiment of the present disclosure. The embodiment of FIG. 5 may be combined with various embodiments of the present disclosure.

Referring to FIG. 5, a slot includes a plurality of symbols in the time domain. For example, one slot may include 14 symbols in the case of the normal CP, whereas one slot may include 12 symbols in the case of an extended CP. Alternatively, one slot may include 7 symbols in the case of a normal CP, whereas one slot may include 6 symbols in the case of an extended CP.

A carrier includes a plurality of subcarriers in the frequency domain. A resource block (RB) may be defined as a plurality of (e.g., 12) consecutive subcarriers in the frequency domain. A bandwidth part (BWP) may be defined as a plurality of consecutive (physical) resource blocks ((P)RB) in the frequency domain and may correspond to one numerology (e.g., SCS, CP length, etc.). A carrier may include a maximum of N (e.g., 5) BWPs. Data communication may be performed through an activated BWP. Each element may be referred to as a resource element (RE) in a resource grid, and one complex symbol may be mapped thereto.

A radio interface between UEs or a radio interface between a UE and a network may be configured as an L1 layer, an L2 layer, and an L3 layer. In various embodiments of the present disclosure, the L1 layer may mean a physical layer. For example, the L2 layer may mean at least one of a MAC layer, an RLC layer, a PDCP layer, and an SDAP layer. For example, the L3 layer may mean an RRC layer.

### <SS block in NR>

An SS block (Synchronization Signal Block: SSB) includes information necessary for a terminal to perform initial access in 5G NR, i.e., a Physical Broadcast Channel (PBCH) including a Master Information Block (MIB) and a Synchronization Signal (SS) (including PSS and SSS). SS block may mean SS / PBCH block.

In addition, a plurality of SSBs may be grouped to define an SS burst, and a plurality of SS bursts may be grouped to define an SS burst set. It is assumed that each SSB is beamformed in a specific direction, and several SSBs in an SS burst set are designed to support terminals in different directions.

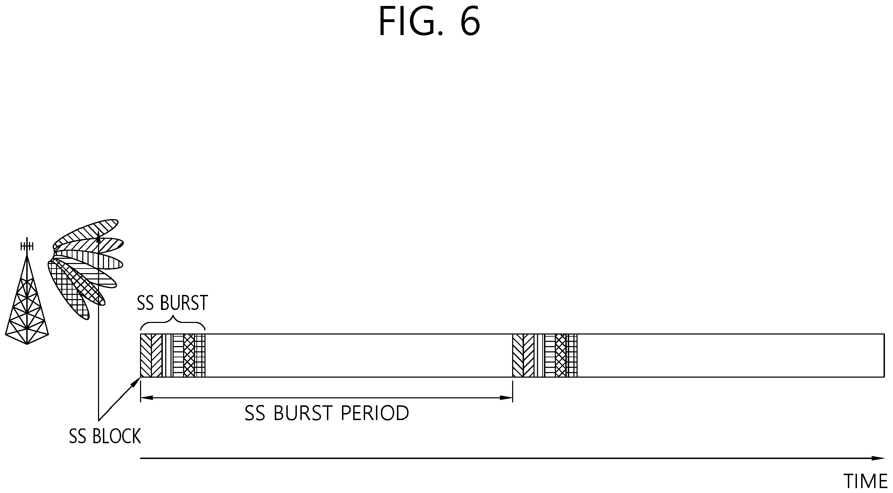

**FIG. 6** **is an exemplary diagram illustrating an example of an SS block in NR.**

Referring to FIG. 6, an SS burst is transmitted in every predetermined periodicity. Accordingly, a UE receives SS blocks, and performs cell detection and measurement.

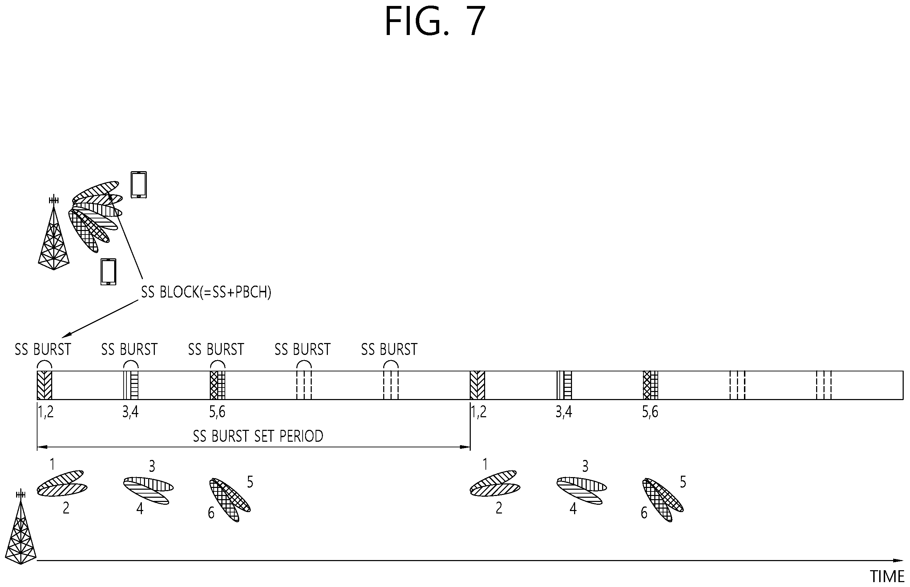

Meanwhile, in the 5G NR, beam sweeping is performed on an SS. A detailed description thereof will be provided with reference to FIG. 7.

**FIG. 7** **is an exemplary diagram illustrating an example of beam sweeping in the NR.**

A base station transmits each SS block in an SS burst over time while performing beam sweeping. In this case, multiple SS blocks in an SS burst set are transmitted to support UEs existing in different directions. In FIG. 7, the SS burst set includes one to six SS blocks, and each SS burst includes two SS blocks.

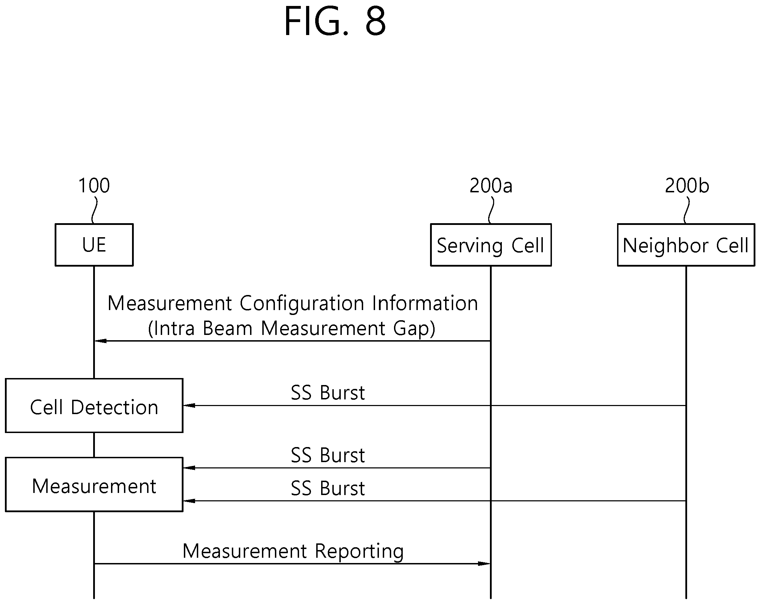

**FIG. 8** **illustrates measurement and a measurement report procedure considering an SS burst.**

As can be seen with reference to FIG. 8, a UE may receive measurement configuration information from a serving cell. The measurement configuration information may include information on a first measurement gap, e.g., an intra beam measurement gap. In addition, the measurement configuration information may include information on a second measurement gap, e.g., an intra RSRP measurement gap.

The UE may receive an SS burst from one or more neighbor cells to perform cell detection.

In addition, the UE may perform measurement based on the SS burst received from the one or more neighbor cells during a first measurement gap (e.g., an intra beam measurement gap) indicated by the information.

In addition, although not shown, the UE may perform RSRP measurement based on a reference signal (RS) from the one or more neighbor cells during the second measurement gap.

In addition, the UE may perform measurement reporting.

### < Non-Terrestrial Network (NTN)>

In the following, an example overview of a non-terrestrial network (NTN) is described.

NTN may indicate a network or network segment using Radio Frequency (RF) resources mounted on a satellite (or an Unmanned Aerial System (UAS) platform).

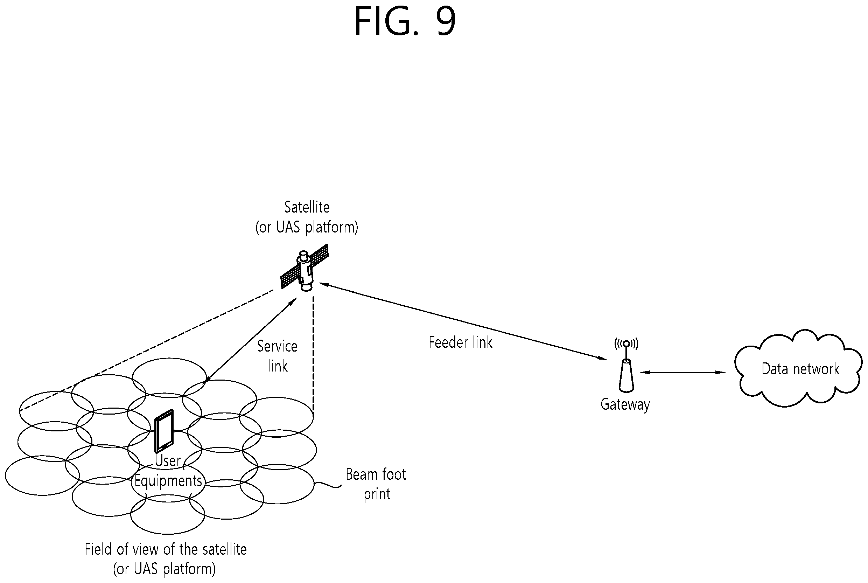

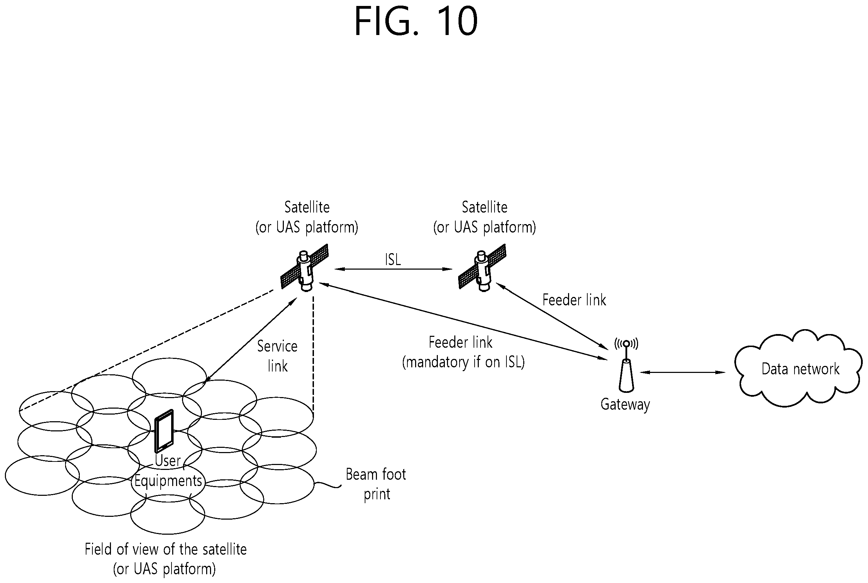

A typical scenario of the NTN providing access to the UE is as illustrated in FIG. 9 or FIG. 10 below.

The following drawings are made to explain a specific example of the present specification. Since the names of specific devices or names of specific signals/messages/fields described in the drawings are provided as examples, the technical features of the present specification are not limited to the specific names used in the drawings below.

**FIG. 9** **shows a first example of an NTN scenario.**

The example of FIG. 9 shows an example of an NTN typical scenario based on a transparent payload.

Referring to the example of FIG. 9 , a satellite (or UAS platform) may generate a service link with a UE. A satellite (or UAS platform) can be connected to the gateway through a feeder link. Satellites can be connected to data networks through gateways. The beam footprint may mean an area in which a signal transmitted by a satellite can be received.

The following drawings are made to explain a specific example of the present specification. Since the names of specific devices or names of specific signals/messages/fields described in the drawings are provided as examples, the technical features of the present specification are not limited to the specific names used in the drawings below.

**FIG. 10** **shows a second example of an NTN scenario.**

The example of FIG. 10 shows an example of an NTN typical scenario based on a regenerative payload.

Referring to the example of FIG. 10, a satellite (or UAS platform) may create a service link with a UE. A satellite (or UAS platform) connected to the UE can be connected to another satellite (or UAS platform) through Inter-satellite links (ISL). Other satellites (or UAS platforms) can be connected to the gateway via feeder links. A satellite can connect to a data network through a gateway with other satellites, based on the regenerated payload. If there is no ISL between a satellite and another satellite, a feeder link between the satellite and the gateway is required.

For reference, the above examples of FIG. 9 and FIG. 10 are merely examples of NTN scenarios, and NTN can be implemented based on various types of scenarios.

NTN can generally be characterized by the following elements:
- One or several sat-gateways (satellite gateways) connecting NTN to the public data network:
   i) Geostationary Earth Orbit (GEO) satellites may be fed by one or several satellite gateways deployed over satellite coverage (e.g., regional or even continental coverage). It can be assumed that a UE in a cell is served by only one sat-gateway.
   ii) Non-GEO satellites may be continuously served by one or several satellite gateways at a time. The system can guarantee service and feeder link continuity between successive service satellite gateways with a time duration sufficient to proceed with mobility anchoring and handover.
- Feeder link or radio link between sat-gateway and satellite (or UAS platform).
- Service link or radio link between UE and satellite (or UAS platform).
- Satellites (or UAS platforms) capable of implementing transparent or regenerative (with on board processing) payloads. A satellite (or UAS platform) may generally generate multiple beams over a designated service area depending on the field of view of the satellite (or UAS platform). The footprints of the beam may be generally elliptical. The field of view of a satellite (or UAS platform) may vary depending on the onboard antenna diagram and minimum elevation angle:
   i) Transparent payload: may include radio frequency filtering, frequency conversion and amplification. Thus, the waveform signal repeated by the payload may not change;
   ii) regenerative payload: may include radio frequency filtering, frequency conversion and amplification, demodulation/decoding, switching and/or routing, and coding/modulation. The regenerative payload may be substantially equivalent to loading all or part of the base station functionality (e.g., gNB) on a satellite (or UAS platform).
- For constellation of satellites, may optionally include inter-satellite link (ISL). This may require a playback payload on the satellite. ISLs can operate at RF frequencies or wide bands.
- The UE may be served by a satellite (or UAS platform) within the targeted service area.

Table 3 below shows a list of various types of satellites (or UAS platforms).

**[Table 3]**

| Platform | Altitude range | Orbit | Typical |
|---|---|---|---|
| | | | beam footprint size |
| Low-Earth Orbit (LEO) satellite | 300 - 1500 km | Circular around the earth | 100 - 1000 km |
| Medium-Earth Orbit (MEO) satellite | 7000 - 25000 km | | 100 - 1000 km |
| Geostationary Earth Orbit (GEO) satellite | 35 786 km | notional station keeping position fixed in terms of elevation/azimuth with respect to a given earth point | 200 - 3500 km |
| UAS platform (including high altitude pseudo satellite (HAPS)) | 8 - 50 km (20 km for HAPS) | | 5 - 200 km |
| High Elliptical Orbit (HEO) satellite | 400 - 50000 km | Elliptical around the earth | 200 - 3500 km |

The examples in Table 3 show examples of the types of NTN platforms.

In general, GEO satellites and UAS may be used to provide continental, regional or local services. The constellation of LEO satellites and the constellation of MEO satellites can be used to provide services in both the northern and southern hemispheres. In some cases, the deployment of such satellites may provide global coverage including the polar regions. For global coverage, this may require proper orbit inclination, sufficient beams generated and ISLs.

### II. Disclosures of the present specification

Disclosures described later in this specification may be implemented in one or more combinations (e.g.,, a combination including at least one of the contents described below). Each of the drawings represents an embodiment of each disclosure, but the embodiments of the drawings may be implemented in combination with each other.

Description of the method proposed in the disclosure of this specification may be composed of a combination of one or more operations/configurations/steps described below. The following methods described below may be performed or used in combination or complementary.

Non-Terrestrial Network (NTN) based communication is being discussed in NR. Terminals can perform NTN-based communication with satellites, airplanes, etc. On the other hand, it has not been discussed in the prior art how to effectively perform NTN-based communication for terminals.

In such cases, feeder link switching operation may occur in NTN communication, where the a terrestrial base station (NTN gateway) changes according to the movement of the NTN satellite. In this case, the feeder link between the NTN satellite and the terrestrial base station may be switched while the service link between the NTN terminal and the NTN satellite is maintained. For example, the NTN terminal may receive signals from the same NTN satellite, but there may be a temporary service interruption due to the feeder link switching. As a result, the temporary service interruption may affect the terminal's ability to transmit and receive signals and the timing of its initial connection and synchronization with signals transmitted from a target TN gNB (e.g., a target terrestrial base station). The operations associated with such feeder link switching has not been clearly discussed in the prior art.

In the following, the present disclosure will describe examples of operations of terminal, operations of NTN satellite, operations of terrestrial base station (e.g., serving NTN base station, target NTN base station), and/or interruption settings due to feeder link switching handover in order to solve the above problems.

Note that other terms, such as NTN payload, satellite, and the like, may be used to describe NTN satellites as disclosed herein. As disclosed herein, an NTN satellite may include a satellite or other air vehicle capable of performing NTN communications.

As shown in the example in FIG. 9, NR-based NTN communication is introduced to efficiently provide communication services to areas where terrestrial network services are not provided through satellites (geostationary satellites GEO, low Earth orbit satellites LEO, etc.).

In the case of a transparent satellite, such as the example in FIG. 9, the satellite amplifies the signal transmitted from the terrestrial base station (e.g., a gNB acting as an NTN gateway), and the satellite can transmit the signal to the terminal. In the case of a regenerative satellite, such as the example in FIG. 10, the satellite may perform functions of a terrestrial base station such as routing, coding and modulation, and decoding demodulation in addition to signal amplification.

The NTN terminal has GPS capability, and the NTN terminal periodically receives position, time, and speed information from NTN satellites.

The following drawings are made to explain a specific example of the present specification. Since the names of specific devices or names of specific signals/messages/fields described in the drawings are provided as examples, the technical features of the present specification are not limited to the specific names used in the drawings below.

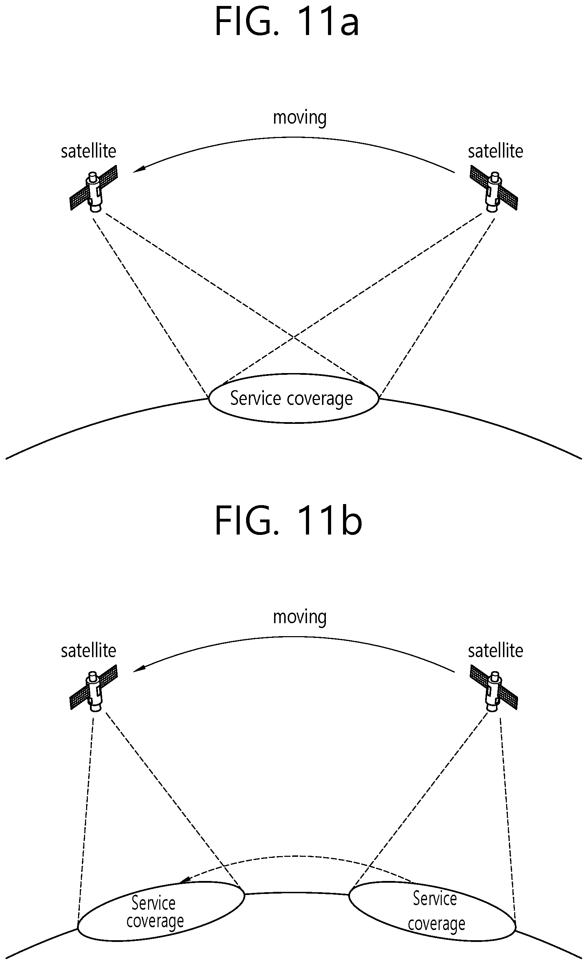

**FIGS. 11a and 11b** **illustrate an example of service coverage of a satellite according to one embodiment of the present disclosure.**

In the case of non-geostationary (NGSO) satellites, NGSO satellites may form links with TN base stations (NTN gateways) and NTN terminals while traveling in a certain orbit. For reference, a satellite (or NTN satellite) described in various examples of the present disclosure may refer to an NGSO satellite.

For the service coverage of these NGSO satellites, two types of service coverage can be considered: service coverage based on earth fixed beams, as shown in Figure 11a, and service coverage based on earth moving beams, as shown in Figure 11b.

Referring to the example in FIG. 11a, an Earth fixed beam may maintain a fixed service coverage for a period of time even if the LEO satellite moves to a certain orbit. For example, if a satellite communicates based on an Earth fixed beam, it can maintain a fixed service coverage for a certain period of time even if the satellite moves to a certain orbit. In this context, Earth fixed beam can refer to a method in which service coverage is maintained even as the satellite moves.

Referring to the example in FIG. 11b, the earth moving beam moves the service coverage as the LEO satellite moves into a certain orbit. For example, if the satellite is communicating based on an earth moving beam, when the satellite moves to a certain orbit, the service coverage may move with the movement of the satellite. Here, earth moving beam can refer to the way the service coverage moves as the satellite moves.

As illustrated in the examples of FIGS. 11a and 11b, the NGSO satellite may move in a constant orbit. For example, as described in the earth fixed beam example or the earth moving beam example, the NGSO satellite moves in a constant orbit. Therefore, the service link between the NGSO satellite and the NTN terminal or the feeder link between the NGSO satellite and the NTN gateway (TN gNB) may change.

The following drawings are made to explain a specific example of the present specification. Since the names of specific devices or names of specific signals/messages/fields described in the drawings are provided as examples, the technical features of the present specification are not limited to the specific names used in the drawings below.

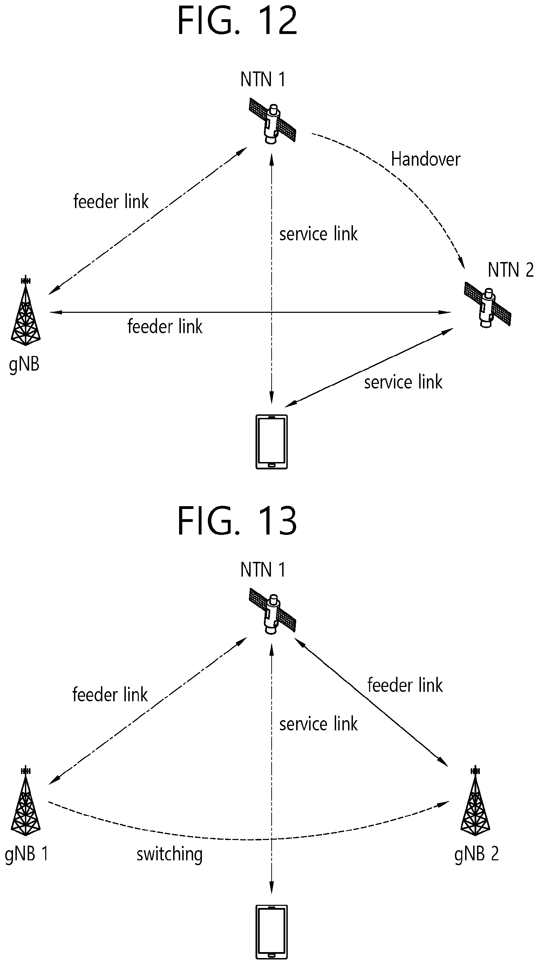

**FIG. 12** **illustrates an example of service link switching according to one embodiment of the present disclosure.**

Figure 12 shows an example of service link switching.

In the case of service link switching, as shown in the example of FIG. 12, the NTN terminal may perform measurements on the neighboring NGSO satellite (e.g., NTN2 in FIG. 12) before receiving the handover command for the neighboring NGSO satellite (e.g., NTN1 in FIG. 12) from the serving satellite (e.g., NTN2 in FIG. 12). Thus, when certain conditions for handover between satellites are met, the NTN terminal may perform a handover from the serving satellite (e.g., NTN 1 in FIG. 12) to the neighboring satellite (e.g., NTN 2 in FIG. 12).

The following drawings are made to explain a specific example of the present specification. Since the names of specific devices or names of specific signals/messages/fields described in the drawings are provided as examples, the technical features of the present specification are not limited to the specific names used in the drawings below.

**FIG. 13** **illustrates an example of feeder link switching according to one embodiment of the present disclosure.**

FIG. 13 shows an example of feeder link switching.

Unlike the example in FIG. 12, in the example in FIG. 13, only the feeder link can change while the serving satellite remains the same.

In this case, the NTN terminal did not measure the reference signal transmitted by the target TN gNB (NTN gateway) (e.g., gNB2 in FIG. 13). That is, the NTN terminal does not measure the reference signal transmitted by the target TN gNB (NTN gateway) before receiving the handover command from the serving satellite. Also, since the serving satellite is the same, the NTN terminal is not aware of the feeder link switching.

In particular, if the NGSO satellite supports hard feeder link switching rather than soft feeder link switching, only one feeder link connection is available at any given time. Therefore, signal transmission and reception may be temporarily interrupted while feeder link switching is performed. For example, when the feeder link of the NTN satellite is switched from the feeder link with gNB1 to the feeder link with gNB2, the communication between the NTN terminal, the NTN satellite, and gNB2 may be temporarily interrupted.

In this case, the NTN gateways (TN gNBs) (e.g., gNB1 and gNB2) may exchange information about the feeder link switching between the NTN gateways (TN gNBs). However, since the NTN terminal does not have information about feeder link switching, a temporary communication interruption may affect the terminal's transmission and reception of signals and the timing of initial connection and synchronization with signals transmitted from the target TN gNB (e.g., target terrestrial base station).

In the following, various examples of the disclosure will be described to illustrate various examples of when feeder link switching is performed, such as the example in FIG. 13. Note that in the present disclosure, feeder link switching may mean a handover when only the feeder link is changed.

For example, in the case of a handover in which the serving NTN remains the same and only the feeder link is changed, the description of the present disclosure for the process of obtaining information about the switching and the handover interruption applied to the NTN terminal is applied based on the situation according to the example of FIG. 13.

The various examples disclosed herein may be similarly applied to feeder link switching operations, including in the case of feeder link switching according to the example of FIG. 13, or in the case of handover by changing feeder links between NTN gateways connected to the same gNB.

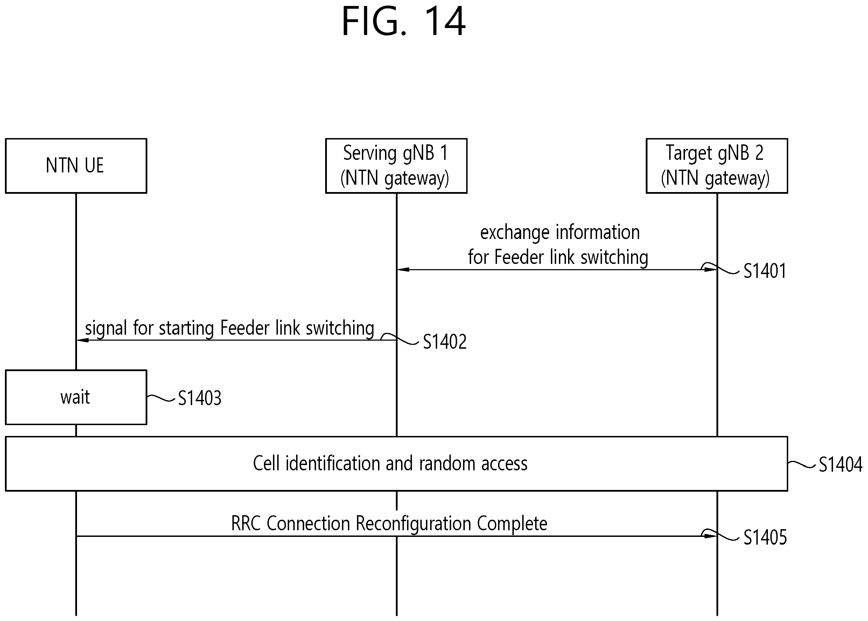

Hereinafter, one example of the disclosure will be described in detail with reference to the example of FIG. 14. The operations described below may include those previously described by way of various examples.

The following drawings are made to explain a specific example of the present specification. Since the names of specific devices or names of specific signals/messages/fields described in the drawings are provided as examples, the technical features of the present specification are not limited to the specific names used in the drawings below.

**FIG. 14** **illustrates an example of an operation of a terminal according to one embodiment of the present disclosure.**

FIG. 14 illustrates an example of operation of a terminal according to the present disclosure. What is shown in FIG. 14 is only an example, and the scope of the present disclosure is not limited by FIG. 14.

The terminal (e.g., NTN UE), the serving base station (e.g., serving gNB1), and the target base station (e.g., Target gNB2) may perform operations according to various examples described in the disclosure of the present specification. For reference, the serving base station may refer to a serving base station that performs the function of an NTN gateway. The target base station may mean a target base station performing a function of an NTN gateway. A target base station may mean a base station that becomes the serving base station of a terminal when feeder link switching is performed.

In step S1401, the serving base station and the target base station may exchange information for feeder link switching. For example, the serving base station may receive location information (e.g., distance or delay between the gNB and the NTN satellite) from the target base station. For example, the serving base station may receive information for feeder link switching from the target base station. Here, the information for feeder link switching may refer to information about the target base station. For example, the information about the target base station may include a cell ID, a reference point, and/or an SMTC of the target base station (gNB2). For example, the information about the target base station may be information that the NTN UE needs to make measurements about the target base station (e.g., gNB2). A reference point may refer to any location (or point in time) along a feeder link between a terrestrial base station and a satellite. For example, a reference point can be a difference in UL/DL frame timing at the base station. Note that the transmission of the reference point may be omitted.

In step S1402, the serving gNB1 (NTN gateway) may signal information (e.g., a handover command) to the NTN terminal about starting the feeder link switching when starting the feeder link switching. For example, the serving base station may transmit the NTN terminal a handover command message containing information about the start of feeder link switching.

The information that the serving base station signals to the NTN terminal may include information about the target gNB2 (NTN gateway) (e.g., cell ID, reference point, SMTC, etc.). Further, the information that the serving base station signals to the NTN terminal may include timing information (e.g., tentatively T_{search_time}) about when the NTN terminal performs a measurement (e.g., cell identification) on the target gNB2 (NTN gateway). Here, T_{search_time} is an example of timing information for when the NTN terminal performs cell identification for the target base station.

The T_{search_time} may be determined by considering the time for the gNB2 to be connected to the NTN satellite and the propagation delay between the gNB2 (NTN gateway) and the NTN UE. For example, the serving base station may determine the T_{search_time} based on the time for the gNB2 to connect to the NTN satellite and the propagation delay between the gNB2 (NTN gateway) and the NTN UE.

Here, the serving base station may determine (or infer) the propagation delay between the target gNB2 (NTN gateway) and the NTN UE based on the reference point of the target gNB2 (NTN gateway). Alternatively, the serving base station may determine (or infer) the propagation delay using the propagation delay between the serving gNB 1 (NTN gateway) and the NTN UE.

Of note, before step S 1402 is performed, the serving base station may determine whether to perform step S1402. For example, the serving base station may determine whether to transmit information (e.g., a handover command) to the NTN terminal about the start of feeder link switching.

For example, if the serving base station (e.g., gNB 1 (NTN gateway)) determines that the distance between the NTN satellite and the serving base station is bigger than or equal to a certain distance (e.g., a distance threshold) based on the orbital information of the NTN satellite, the serving base station may decide to send the handover command message to the NTN terminal. In another example, based on the location information exchanged with the target base station (e.g., gNB2) (e.g., distance or delay between the gNB and the NTN satellite), the serving base station may determine to send the handover command message to the NTN terminal. Here, delay may refer to the delay between the target base station and the NTN satellite (e.g., the delay of the feeder link). For example, the serving base station may exchange location information of the target base station with the target base station or delay information between the target base station and the NTN satellite. The serving base station may compare the distance d1 between the serving base station and the NTN satellite with the distance d2 between the target base station and the NTN satellite to determine to transmit the handover command message to the NTN terminal. Alternatively, the serving base station may determine to transmit the handover command message to the NTN terminal by comparing the delay (p1) between the serving base station and the NTN satellite with the delay (p2) between the target base station and the NTN satellite. For example, the serving base station may determine that the target base station and the NTN satellite are getting closer when d1>d2 or p1 >p2, and may send a handover command message to the NTN terminal.

Based on this determination, the serving base station may send a handover command message to the NTN UE.

As briefly described above in step S 1401, the serving base station may exchange (receive and/or transmit) information for feeder link switching with the target base station (e.g., gNB2) before transmitting the handover command. For example, the serving base station may receive information for feeder link switching from the target base station. Here, the information for feeder link switching may refer to information about the target base station. For example, the information about the target base station may include a cell ID of the target base station (gNB2), a reference point, an SMTC, and the like. For example, the information about the target base station may be information that the NTN UE needs to perform measurements for the target base station (e.g., gNB2).

In addition, the serving base station (e.g., gNB 1) may determine timing information about when the NTN UE start measurement for gNB2, based on the propagation delay of the gNB 1-NTN satellite-NTN UE or the propagation delay of the gNB2-NTN satellite-NTN UE.

The serving base station (e.g., gNB 1) may transmit information about the target base station and timing information about when the NTN UE start performing measurements for gNB2. to the NTN UE. For example, the serving base station may transmit a handover command message that includes information about the target base station and timing information about when the NTN UE is to start making measurements for gNB2 to the NTN UE.

When the serving base station (e.g., gNB 1) considers the propagation delay of gNB2-NTN satellite-NTN UE, the serving base station may know the delay information of gNB2 and NTN satellite through information exchange with the target base station. And the serving base station (e.g., gNB1) may know the delay information of the service link (NTN UE and NTN satellite) based on the service link delay used for communication between the NTN UE and the serving base station.

In step S1403, based on the timing information, the NTN UE may wait to perform the measurement for the target base station. For example, the NTN UE may receive timing information from the serving base station about when to initiate measurements for gNB2. Before the measurement time for the target gNB (gNB2) transmitted by the serving base station, the NTN UE shall not attempt to measure for the target base station.

Note that due to the nature of the NTN communication system, the service area covered by the NTN satellite is larger than the service area covered by the base station in TN communication. In the case of a handover where only the feeder link is changed (i.e., feeder link switching), all NTN UEs in the service area of the NTN satellite must perform the handover simultaneously. Therefore, additional delays may occur when the NTN UE performs the physical random access channel (PRACH) procedure to the target gNB2 (NTN gateway) because all NTN UEs in the service area of the NTN satellite perform the PRACH procedure.

To avoid this additional delay, the serving gNB 1 (NTN gateway) may set an additional timing (e.g., T_{search_rand}) (e.g., {1,2,3,4,5} msec) when transmitting the timing information (e.g., T_{search_time}) in step S 1402. Here, T_{search_rand} may mean a timing that is randomly selected from, for example, 1 ms, 2 ms, 3 ms, 4 ms, 5 ms, etc. In other words, the serving base station may transmit the timing (e.g., T_{search_rand}) in addition to the timing information (e.g., T_{search_time}) to the NTN terminal. The NTN terminal may then randomly select the additional timing, based on the T_{search_rand}, to determine when to perform cell identification for the target gNB2 (NTN gateway). For example, the NTN UE may determine the time to perform cell identification as T_{search_time}+ T_{search_rand}. Therefore, the NTN UE may perform the measurement of the target base station after receiving the signaling about the start of feeder link switching from the serving gNB 1 (NTN gateway), but after the time T_{search_time} and T_{search_rand} have elapsed. For example, the NTN terminal may perform the handover procedure by performing cell identification to the target gNB2 (NTN gateway) after the T_{search_time} and T_{search_rand} times have elapsed, after receiving a signal from the serving gNB1 (NTN gateway) about the start of feeder link switching.

Note that in step S1403, the NTN terminal may perform operations for power saving (e.g., DRX mode operations or RRC Inactive_state mode operations). For example, the serving base station may request the NTN terminal to perform the power saving operation.

For example, the NTN UE may operate by switching to Discontinuous Reception (DRX) for the time T_{search_time} + T_{search_rand} to save power, or the NTN UE may operate in RRC INACTIVE_state mode. During that time (e.g., T_{search_time} + T_{search_rand}), the NTN UE may temporarily not perform measurements on the target base station. For example, the NTN terminal may temporarily not perform Radio Resource Management (RRM) measurement and radio link monitoring.

For example, the network (e.g., the serving base station) may set the DRX cycle to be used during the time T_{search_time}+ T_{search_rand} when sending the handover command message to the NTN UE. The serving base station may then transmit the set DRX cycle to the terminal along with the handover command message, thereby enabling the terminal to operate in DRX mode or RRC INACTIVE_state mode. For example, the terminal may operate in DRX mode based on the DRX cycle for the time T_{search_time}+ T_{search_rand}, or the terminal may operate in RRC INACTIVE_state mode for the time T_{search_time}+ T_{search_rand}.

In another example, when the handover command for feeder link switching is received, the NTN terminal can operate in DRX mode or INACTIVE_state mode with a preset DRX cycle for that time through the time information of T_{search_time} and T_{search_rand}.

In step S 1404, the NTN UE may perform a cell identification operation and a random access operation. For example, the NTN UE may perform a handover procedure by performing cell identification to the target gNB2 (NTN gateway) after the time based on T_{search_time} and T_{search_rand} have elapsed.

In step S1405, the NTN terminal may transmit an RRC Connection Reconfiguration Complete message to the target base station. For example, the NTN terminal may send the RRC Connection Reconfiguration Complete message after completing the random access procedure according to step S 1404. The transmission of the RRC Connection Reconfiguration Complete message may indicate that a connection between the NTN terminal and the target base station has been established. Note that the RRC Connection Reconfiguration Complete message is only an example, and the NTN terminal may send any other type of message to the target base station in step S 1405 to indicate that a connection between the NTN terminal and the target base station has been established.

Note that in step S 1404, the target base station may transmit an RRC Connection Reconfiguration message to the NTN terminal. Based on the reception of the RRC Connection Reconfiguration message, the NTN UE may send an RRC Connection Reconfiguration Complete message in step S1405.

For reference, handover interruption due to feeder link switching in NTN can be defined based on NTN terminal processing time, time of T_{search_time} + T_{search_rand}, cell identification time for target gNB2 (NTN gateway), time for PRACH occasion, and T_{margin}. The handover interruption may mean the time from the reception of the handover command until the NTN terminal transmits the new PRACH. T_{margin} is the time for SSB post-processing, which can be up to 2 msec. Here, the NTN terminal processing time can be defined as the time from receiving the handover command to transmitting the new PRACH. Here, the NTN terminal processing time may be the time taken by the NTN terminal before searching or measuring the target cell. For example, the terminal processing time may be the preparation time for SW stack processing of the terminal, HARQ processing of the serving cell, RF retuning, etc. The NTN terminal processing time can be assumed to be 20 msec.

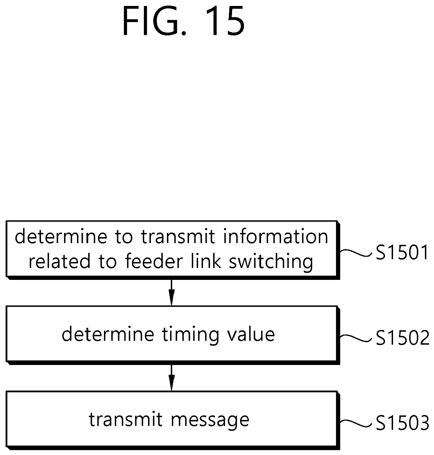

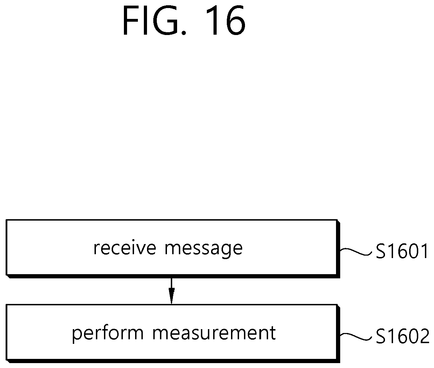

Hereinafter, with reference to the example of FIG. 15, an example of the operation of a serving base station described in various examples of the disclosure will be described. Referring to the example of FIG. 16, an example of the operation of an NTN terminal described in the various examples of the disclosure is described.

The following drawings are made to explain a specific example of the present specification. Since the names of specific devices or names of specific signals/messages/fields described in the drawings are provided as examples, the technical features of the present specification are not limited to the specific names used in the drawings below.

**FIG. 15** **illustrates an example of an operation of an NTN base station according to one embodiment of the present disclosure.**

FIG. 15 illustrates an example of the operation of a serving base station in accordance with the present disclosure. What is shown in FIG. 15 is illustrative only, and the scope of the present disclosure is not limited by FIG. 15.

The serving base station may perform any of the various example behaviors previously described in the disclosure.

For reference, in the example of FIG. 15, steps S1501 and S1502 are shown to be performed sequentially. However, this is for illustrative purposes only. The order in which steps S1501, S1502 are performed is not limited by the order shown in FIG. 15. For example, steps S1501 and S1502 may be performed simultaneously.

In step S 1501, the serving base station may determine whether to transmit information related to the feeder link switching. For example, the serving base station may determine whether to transmit a handover command message to the NTN terminal that includes information related to the feeder link switching. The information related to feeder link switching may refer to information about initiating feeder link switching as previously described in step S1402 of FIG. 14. The information related to feeder link switching may include information about the target base station (e.g., cell ID, reference point, SMTC, etc.), timing information about when the NTN terminal performs measurements (e.g., cell identification) on the target base station, and additional additional timing information (e.g., T_{search_}rand).

Of note, prior to or when performing step S 1501, the serving base station may exchange information for feeder link switching with the target base station. For example, the serving base station may perform the operation previously described in step S 1401 of FIG. 14.

For example, if the serving base station (gNB1 (NTN gateway)) uses orbital information of the NTN satellite to determine that it is within a certain distance from the NTN satellite, the serving base station may decide to send a handover command message to the NTN terminal. In another example, based on the location information (e.g., the distance or delay between the gNB and the NTN satellite) exchanged with the target base station (e.g., gNB2), the serving base station may decide to send a handover command message to the NTN terminal. Based on this decision, the serving base station may transmit the handover command message to the NTN UE in a later step S1503.

In step S 1502, the serving base station may determine a timing value. For example, the serving base station may determine timing information for when the NTN terminal performs a measurement (e.g., cell identification) on the target base station, and additional additional timing information (e.g., T_{search_rand}). For example, the serving base station may determine timing information about when the NTN UE initiates a measurement for gNB2, based on the propagation delay of the gNB 1-NTN satellite-NTN UE or the propagation delay of the gNB2-NTN satellite-NTN UE.

When the serving base station (e.g., gNB 1) considers the propagation delay of gNB2-NTN satellite-NTN UE, the serving base station may know the delay information of gNB2 and NTN satellite through information exchange with the target base station. And the serving base station (e.g., gNB1) may know the delay information of the service link (NTN UE and NTN satellite) based on the service link delay used for communication between the NTN UE and the serving base station.

Note that step S 1502 may be performed before step S 1501 is performed, or may be performed simultaneously with step S 1501. Note that step S1501 and step S1502 may be performed together with step S1503.

In step S1503, the serving base station may transmit a message to the NTN terminal. For example, the serving base station may transmit a handover command message to the NTN terminal that includes information related to feeder link switching.

Note that the network (e.g., the serving base station) may set the DRX cycle to be used during the time T_{search_time}+ T_{search_rand} when sending the handover command message to the NTN UE. The serving base station may then transmit the set DRX cycle to the terminal along with the handover command message, thereby enabling the terminal to operate in DRX mode or RRC INACTIVE_state mode. For example, the terminal may operate in DRX mode based on the DRX cycle for the time T_{search_time}+ T_{search_rand}, or the terminal may operate in RRC INACTIVE_state mode for the time T_{search_time}+ T_{search_rand}.

After receiving the message, based on the timing information, the NTN terminal may wait without performing any measurements on the target base station. For example, the NTN terminal may perform the handover procedure by performing measurements (e.g., cell identification) on the target base station after the time based on T_{search_time} and T_{search_rand} have elapsed, after receiving signaling (e.g., a handover command message) about the start of feeder link switching from the serving base station.

Of note, step S 1503 may be performed in the same manner as step S 1402 of FIG. 14.

The following drawings are made to explain a specific example of the present specification. Since the names of specific devices or names of specific signals/messages/fields described in the drawings are provided as examples, the technical features of the present specification are not limited to the specific names used in the drawings below.

**FIG. 16** **illustrates an example of an operation of a terminal according to one embodiment of the present disclosure.**

FIG. 16 illustrates an example operation of an NTN terminal in accordance with the disclosure of the present specification. What is shown in FIG. 16 is only an example, and the scope of the present disclosure is not limited by FIG. 16.

The NTN terminal may perform operations according to various examples previously described in the disclosure of this specification.

In step S1601, the NTN terminal may receive a message. For example, the NTN terminal may receive a handover command message from the serving base station that includes information related to feeder link switching. The information related to feeder link switching may include information about the target base station (e.g., cell ID, reference point, SMTC, etc.), timing information about when the NTN terminal performs a measurement (e.g., cell identification) on the target base station, and additional additional timing information (e.g., T_{search_}rand).

In step S1602, the NTN terminal may perform measurements. For example, the NTN terminal may perform a cell identification operation and a random access operation for the target base station. For example, the NTN terminal may perform a random access procedure and a handover procedure by performing measurements (e.g., cell identification) for the target base station after time based on T_{search_time} and T_{search_rand} have elapsed.

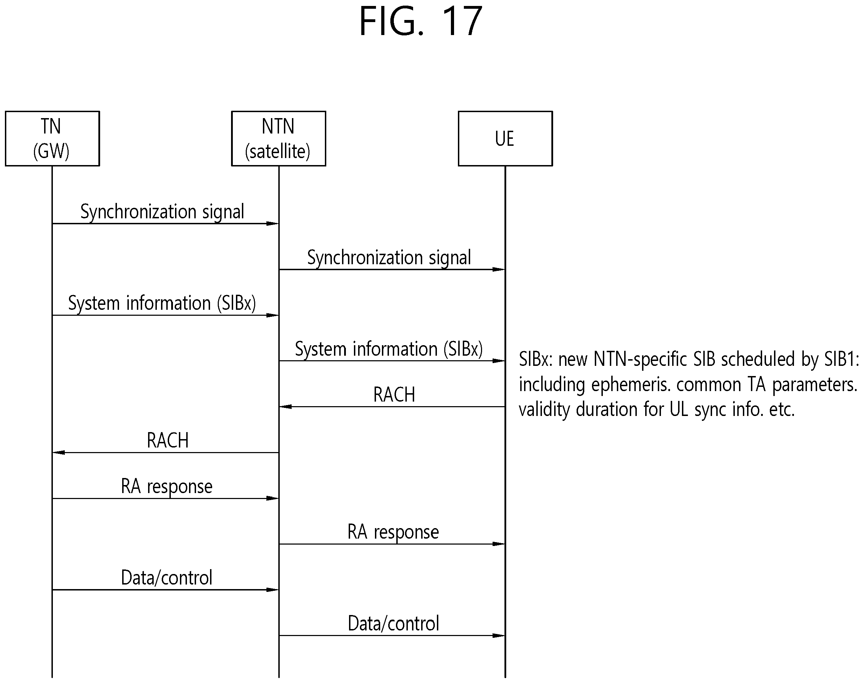

Hereinafter, one example of an initial access procedure for NTN communication will be described with reference to the example of FIG. 17. For reference, the example of FIG. 17 illustrates an example of an NTN terminal performing an initial access procedure to perform communication with an NTN satellite and an NTN base station (e.g., a base station performing NTN communication in the present specification, such as a serving NTN base station or a target NTN base station, etc.). The procedures described in the example of FIG. 17 may be performed by an NTN terminal to connect with an NTN satellite and an NTN base station, in various examples. For example, the operations described in the example of FIG. 17 may be performed before step S1401 of FIG. 14 is performed, before step S1501 of FIG. 15 is performed, or before step S1601 of FIG. 16 is performed.

**FIG. 17** **illustrates an example of an initial access procedure of an NTN communication according to one embodiment of the present disclosure.**

In the example in Figure 17, TN(GW) refers to an NTN base station. NTN(satellite) refers to an NTN satellite.

The TN (GW) may transmit a synchronization signal to the NTN satellite, and the NTN satellite may transmit a synchronization signal to the UE.

The TN (GW) may transmit system information to the NTN satellite, and the NTN satellite may transmit system information to the UE.

For reference, the system information can be specifically obtained as follows.

Acquisition of system information (SI) is described.

The system information (SI) is divided into a MasterInformationBlock (MIB) and a plurality of SystemInformationBlocks (SIBs). Where,
- The MIB is transmitted on the BCH with an 80ms period, repeats within 80ms, and includes the parameters required to obtain a SystemInformationBlockType1 (SIB 1) from a cell;
- SIB1 is transmitted with periodicity and repetition on DL-SCH. SIB1 includes information about the availability and scheduling (e.g., periodicity, SI-window size) of other SIBs. SIB1 also indicates whether they (i.e., the other SIBs) are provided on a periodic broadcast basis or on demand. If the other SIBs are provided on demand, SIB1 includes information for the terminal to fulfill the SI request;
- SIBs other than SIB1 are carried in SystemInformation (SI) messages transmitted over DL-SCH. Each SI message is sent within a periodically occurring time domain window (called an SI-window).

In the example of FIG. 17, the system information may include a SIBx. The SIBx may be, for example, an SIB for NTN communication. SIBx may be scheduled by SIB 1. The SIBx may include information about satellite ephemeris information, parameter information related to common TA, validity duration of such information or UL synchronization information, etc.

The UE may transmit a random access channel (RACH) to the TN (GW), and the TN (GW) may transmit a RACH to the NTN satellite. The UE may send an initial control message over the RACH.

The TN (GW) may trasnmit Random Access (RA) response messages to the NTN satellite, and the NTN satellite can send RA response messages to the UE.

After the RA response message is transmitted, the TN (GW) may transmit data and/or control signals to the NTN satellite, and the NTN satellite may transmit data and/or control signals to the UE.

As described in the disclosure with reference to various examples, the terminal, the serving base station, the target base station, and the NTN satellite may exchange or provide information to effectively and efficiently perform NTN-based communications. Further, as described in the disclosure herein with reference to various examples, the serving base station may enable the terminal to efficiently perform measurements related to the NTN-based communication and support the mobility of the terminal. For example, in the case of a handover due to feeder link switching, the serving gNB may provide the UE with a measurement time for the target gNB (e.g., a time to perform cell identification), thereby ensuring the mobility of the UE.

For reference, the operation of the terminal (e.g., UE, NTN UE, NTN terminal, etc.) described in the present disclosure may be implemented by the devices of FIGS. 1 to 3 described above. For example, a terminal (e.g., UE, NTN UE, NTN terminal, etc.) may be the first device 100 or the second device 200 of FIG. 1. For example, the operation of a terminal (e.g., UE, NTN UE, NTN terminal, etc.) described in the present disclosure may be processed by one or more processors 102 or 202. The operation of the terminal described in the present disclosure may be stored in one or more memories 104 or 204 in the form of an instruction/program (e.g., instruction and executable code) executable by the one or more processors 102 or 202. The one or more processors 102 or 202 may control the one or more memories 104 or 204 and one or more transceivers 105 or 206 and execute instructions/programs stored in the one or more memories 104 or 204 to perform the operation of a terminal (e.g., UE, NTN UE, NTN terminal, etc.) described in the present disclosure.

In addition, instructions for performing the operation of a terminal (e.g., UE, NTN UE, NTN terminal, etc.) described in the present disclosure may be stored in a non-volatile computer-readable storage medium. The storage medium may be included in the one or more memories 104 or 204. In addition, the instructions recorded in the storage medium may be executed by the one or more processors 102 or 202 to perform the operation of a terminal (e.g., UE) described in the present disclosure.

For reference, the operations of a base station (e.g., gNB, serving gNB, Target gNB, eNB, NG-RAN, RAN, etc.) described in the present disclosure may be implemented by the devices of FIGS. 1 to 3 which will be described below. For example, the base station (e.g., gNB, serving gNB, Target gNB, eNB, NG-RAN, RAN, etc.) may be the first device 100a or the second device 100b of FIG. 1. For example, the operation of the base station (e.g., gNB, serving gNB, Target gNB, eNB, NG-RAN, RAN, etc.) described in the present disclosure may be processed by one or more processors 102 or 202. The operation of the terminal described in the present disclosure may be stored in one or more memories 104 or 204 in the form of an instruction/program (e.g., instruction and executable code) executable by the one or more processors 102 or 202. The one or more processors 102 or 202 may control the one or more memories 104 or 204 and one or more transceivers 106 or 206 and execute instructions/programs stored in the one or more memories 104 or 204 to perform the operation of the base station (e.g., gNB, serving gNB, Target gNB, eNB, NG-RAN, RAN, etc.) described in the present disclosure.

In addition, the instructions for performing the operation of the base station (e.g., gNB, serving gNB, Target gNB, eNB, NG-RAN, RAN, etc.) described in the present disclosure may be stored in a non-volatile (or non-transitory) computer-readable storage medium. The storage medium may be included in the one or more memories 104 or 204. In addition, the instructions recorded in the storage medium may be executed by the one or more processors 102 or 202 to perform the operation of the base station (e.g., NG-RAN, gNB, gNB (NB-IoT), gNB (NR) eNB), RAN, etc.) described in the present disclosure.

Although preferred embodiments have been described above, the present disclosure is not limited to such specific embodiments and thus can be modified, changed, or improved in various manners within the spirt of the present disclosure and the scope of the clams.

Although methods are described as a series of steps or blocks based on a flowchart in the exemplary system described above, they are not limited to the order of the described steps, and some steps may occur in a different order or simultaneously with other steps as described above. In addition, those skilled in the art will understand that the steps shown in the flowchart are not exclusive, and that other steps may be included or that one or more steps of a flowchart may be deleted without affecting the scope of rights.

The claims described herein may be combined in various ways. For example, the technical features of the method claims of the present disclosure may be combined and implemented as an apparatus, and the technical features of the apparatus claims of the present disclosure may be combined and implemented as a method. In addition, the technical features of the method claims of the present disclosure and the technical features of the apparatus claims may be combined and implemented as an apparatus, and the technical features of the method claims of the present disclosure and the technical features of the apparatus claims may be combined and implemented as a method.

## Claims

1. A method for performing communications related to a Non-Terrestrial Network (NTN), the method performed by a serving base station and comprising:
transmitting a synchronization signal to a terminal;
transmitting system information related to the NTN to the terminal, based on the terminal being connected to the serving base station via an NTN satellite;
receiving a random access channel (RACH) from the terminal;
transmitting a random access (RA) response message to the terminal; and
transmitting a handover command message including information related to switching a feeder link to the terminal,
wherein the information related to switching a feeder link includes information of a target base station and timing information related to measurements of the target base station,
wherein the timing information includes a first timing value related to a time to initiate a measurement for the target base station and a second timing value which is a random timing value,
wherein the first timing value and the second timing value is used to enable the terminal to perform a measurement for the target base station after the expiration of a timer based on the first timing value and the second timing value.

2. The method of claim 1, further comprising:
determining whether to transmit information related to the feeder link switching, based on the distance between the NTN satellite and the serving base station or the location information of the target base station.

3. The method of claim 1, further comprising:
determining a first timing value related to a time at which the terminal initiates a measurement for the target base station, based on a propagation delay between the terminal and the NTN satellite and the serving base station, or based on a propagation delay between the terminal and the NTN satellite and the target base station.

4. The method of claim 1, further comprising:
exchanging information for feeder link switching with the above target base station

5. The method of claim 4, wherein the exchanging further comprising:
receiving at least one of location information of the target base station, cell ID of the target base station, or Signal (SS)/Physical Broadcast Channel (PBCH) block (SSB) measurement timing configuration (SMTC) information from the target base station.

6. The method of claim 1,
wherein request information to operate in DRX mode or RRC Inactive state mode may be included in the handover command message, for power saving of the terminal.

7. The method of claim 1,
wherein the feeder link switching means that the service link between the NTN satellite and the terminal is maintained, and the feeder link between the NTN satellite and the serving base station is changed.

8. A serving base station performing communications related to a Non-Terrestrial Network (NTN), comprising:
at least one transceiver;
at least one processor; and
at least one computer memory operably connectable to the at least one processor and storing instructions that, based on being executed by the at least one processor, perform operations comprising:
transmitting a synchronization signal to a terminal;
transmitting system information related to the NTN to the terminal, based on the terminal being connected to the base station via an NTN satellite;
receiving a random access channel (RACH) from the terminal;
transmitting a random access (RA) response message to the terminal; and
transmitting a handover command message including information related to switching a feeder link to the terminal,
wherein the information related to switching a feeder link includes information of a target base station and timing information related to measurements of the target base station,
wherein the timing information includes a first timing value related to a time to initiate a measurement for the target base station and a second timing value which is a random timing value,
wherein the first timing value and the second timing value is used to enable the terminal to perform a measurement for the target base station after the expiration of a timer based on the first timing value and the second timing value.

9. A method for performing communications related to a Non-Terrestrial Network (NTN), the method performed by a terminal and comprising:
receiving a synchronization signal from a base station;
receiving system information related to the NTN from the base station, based on the terminal being connected to the base station via an NTN satellite;
transmitting a random access channel (RACH) to the base station;
receiving a random access (RA) response message from the base station;
receiving a handover command message including information related to switching a feeder link from the base station,
wherein the information related to switching a feeder link includes information of a target base station and timing information related to measurements of the target base station, and
wherein the timing information includes a first timing value related to a time to initiate a measurement for the target base station and a second timing value which is a random timing value; and
performing a measurement for the target base station after the expiration of a timer based on the first timing value and the second timing value.

10. The method of claim 9,
wherein the feeder link switching means that the service link between the NTN satellite and the terminal is maintained, and the feeder link between the NTN satellite and the serving base station is changed.

11. The method of claim 9, further comprising:
performing a random access procedure for the target base station, based on the measurement performed on the target base station.

12. The method of claim 11, further comprising:
transmitting RRC Connection Reconfiguration Complete message to the target base station.

13. A terminal for performing communications related to a Non-Terrestrial Network (NTN), comprising:
at least one transceiver;
at least one processor; and
at least one computer memory operably connectable to the at least one processor and storing instructions that, based on being executed by the at least one processor, perform operations comprising:
receiving a synchronization signal from a base station;
receiving system information related to the NTN from the base station, based on the terminal being connected to the base station via an NTN satellite;
transmitting a random access channel (RACH) to the base station;
receiving a random access (RA) response message from the base station;
receiving a handover command message including information related to switching a feeder link from the base station,
wherein the information related to switching a feeder link includes information of a target base station and timing information related to measurements of the target base station, and
wherein the timing information includes a first timing value related to a time to initiate a measurement for the target base station and a second timing value which is a random timing value; and
performing a measurement for the target base station after the expiration of a timer based on the first timing value and the second timing value.

14. The terminal of claim 13, wherein the terminal is an autonomous driving device in communication with at least one of a mobile terminal, a network, and an autonomous driving vehicle other than the termal.

15. An apparatus in mobile communication system,
at least one processor; and
at least one computer memory operably connectable to the at least one processor and storing instructions that, based on being executed by the at least one processor, perform operations comprising:
identifying a synchronization signal transmitted from a base station;
identifying system information related to the NTN from the base station, based on the apparatus being connected to the base station via an NTN satellite;
generating a random access channel (RACH) to be transmitted to the base station;
identifying a random access (RA) response message from the base station;
identifying a handover command message including information related to switching a feeder link from the base station,
wherein the information related to switching a feeder link includes information of a target base station and timing information related to measurements of the target base station, and
wherein the timing information includes a first timing value related to a time to initiate a measurement for the target base station and a second timing value which is a random timing value; and
performing a measurement for the target base station after the expiration of a timer based on the first timing value and the second timing value.

16. A non-transitory computer-readable storage medium recording instructions,
wherein the instructions being executed by one or more processors, causing one or more processors to execute the instructions to perform operations comprising:
identifying a synchronization signal transmitted from a base station;
identifying system information related to the NTN from the base station, based on a apparatus including the one or more processors being connected to the base station via an NTN satellite;
generating a random access channel (RACH) to be transmitted to the base station;
identifying a random access (RA) response message from the base station;
identifying a handover command message including information related to switching a feeder link from the base station,
wherein the information related to switching a feeder link includes information of a target base station and timing information related to measurements of the target base station, and
wherein the timing information includes a first timing value related to a time to initiate a measurement for the target base station and a second timing value which is a random timing value; and
performing a measurement for the target base station after the expiration of a timer based on the first timing value and the second timing value.
